# EUROPEAN PATENT APPLICATION

(11) **EP 3 643 154 A1**
(43) Date of publication of application: **29.04.2020**
(21) Application number: 19204746.2
(22) Date of filing: 23.10.2019
(51) Int. Cl.: A01C 7/10, A01C 7/12, A01C 7/08

(54) **METERING UNIT FOR AGRICULTURAL SEEDING AND PNEUMATIC FERTILIZING MACHINES**

(30) Priority: 25.10.2018 IT 201800009791
(71) Applicant: Torrico S.r.l., 36053 Gambellara (VI) (IT)
(72) Inventor: PEGORARO, Luciano, 36053 Gambellara (VI) (IT)
(74) Representative: Burchielli, Riccardo

(57) **Abstract**

A metering unit for agricultural seeding and and pneumatic fertilizing machines, comprising an external structure (10) shaped like a hopper, inside which there is a metering spool (11), which is substantially cylindrical and rotatable by means of an external transmission (12). The metering spool (11) is configured to deliver a prefixed quantity of product, such as seeds and/or fertilizer, which is mixed with an air flow and sent to one or more distribution groups of the agricultural machine. Moreover, the metering spool (11) has an axis of rotation placed in a horizontal direction with respect to a movable bulkhead (16; 26); the movable bulkhead (16; 26) is arranged below the metering spool (11) and placed in a transverse direction with respect to the rotation axis of the metering spool (11).

## Description

The present invention generally refers to a volumetric metering unit that can be used on agricultural seeding machines and pneumatic fertilizing machines.

The known agricultural seeding and fertilizing machines usually comprise a hopper for containing seeds and/or fertilizer products, which is normally positioned on the rear of the tractor and near the seeding units and, in some cases, is integrated with a hydraulic screw loader, and one or more volumetric dosers, which normally interact with one or more pneumatic or air-jet distribution heads and which are driven by a turbine for transporting, distributing and conveying the seeds or the fertilizer to the seeding units; the agricultural seeding machine may also comprise one or more seeding bars, equipped with seed-covering combs.

In particular, pneumatic seeding machines for cereals use different types of dosers, whose common purpose is to dispense the product (seeds or fertilizers with different granulometry and different specific weight) in a defined quantity; the delivery can be defined in Kg/min and may vary between less than 1 Kg/min and more than 50 Kg/min and, specifically, there are mainly two technologies for varying said delivery.

A first technology uses a single shaped spool, the shape of which varies thanks to the use of a movable trolley, so as to also obtain a variation in the delivery volume of the spool, while a second technology is provided for completely changing the type of spool according to the volume of product to be dispensed.

The volumetric dosers which provide for a replacement of the spoon allow the use of many types of spoons and therefore they are more flexible for use with various types of products (fine seeds, coarse, fertilizer, etc.).

As already said, the product, once dispensed through the spool, is brought to the distribution heads by an air-flow and afterwards mixed with air thanks to a Venturi type system.

However, the known volumetric dosers that are still in use do not allow to obtain special applications, such as, for example, the possibility of sharing the product to be dispensed into two equal parts, as well as a reliable seeding test, i.e. a test, which is necessary before each seeding operation and which is normally managed by an electronic control system, suitable to verify the accuracy of the quantity of seed delivered in a prefixed time interval.

The object of the present invention is therefore to overcome the aforementioned drawbacks and, in particular, to provide a metering unit for agricultural seeding and pneumatic fertilizing machines, which allows the delivered product (seed, fertilizer, etc.) to be divided into two equal parts, thus also allowing to adequately control the flow of said delivered product in the soil.

Another object of the present invention is to provide a metering unit for agricultural seeding and pneumatic fertilizing machines, which allows a reliable seeding test to be carried out so as to precisely verify the quantity of product delivered in a prefixed time interval.

These and other objects, according to the present invention, are achieved by a metering unit for agricultural seeding and pneumatic fertilizing machines, according to the attached claim 1.

Other detailed technical features are described in the following claims. Further features and advantages of the metering unit for agricultural seeding and pneumatic fertilizing machines, according to the present invention, will become more clear from the following description, relating to two preferred but not limiting embodiments of the volumetric metering unit of the invention, and referring to the attached schematic drawings, in which:
- figure 1 is a perspective view of a first embodiment of the volumetric metering unit for agricultural seeding and pneumatic fertilizing machines, according to the present invention;
- figures 2A, 2B and 2C show three different metering spools available and usable within the metering unit, according to the present invention;
- figures 3 and 4 show some ways of using the metering unit of fig. 1, according to the present invention;
- figures 5, 6, 7 and 8 show other methods of using the metering unit of fig. 1, according to the present invention;
- figure 9 shows a partial and partially sectioned view of another embodiment of the volumetric metering unit, in a first use configuration, according to the present invention;
- figure 10 is a partial and partially sectional view of the volumetric metering unit of fig. 9, in a second use configuration, according to the present invention.

First of all, it should be noted that, although the following description refers to the use of a metering unit for a seeding machine, the invention can be extended, without any significant variation of the inventive concept, to any type of agricultural seeding and/or fertilizing machine or drill, which may be coupled with reclosable and non-reclosable machines, such as harrows, tine cultivators, disc cultivators, rollers, etc., with reclosable and non-reclosable tools, and which is configured to prepare and/or process the soil.

Moreover, the machine, as a whole, may also be understood as a single machine for distributing a granular product (seed) and/or a powder (fertilizer) or any other chemical product for agriculture, regardless of its coupling with a machine specifically used for soil processing.

With reference to the aforementioned figures, the volumetric metering unit, according to the invention, comprises an external structure 10 shaped like a hopper and preferably equipped with an upper openable guillotine and with at least one wide removable side wall 13 to allow an easy cleaning of all components; a metering spool 11, which is shaped substantially as a cylinder, is installed inside the structure 10 and is operated by means of a mechanical transmission, preferably with a gear speed change 12.

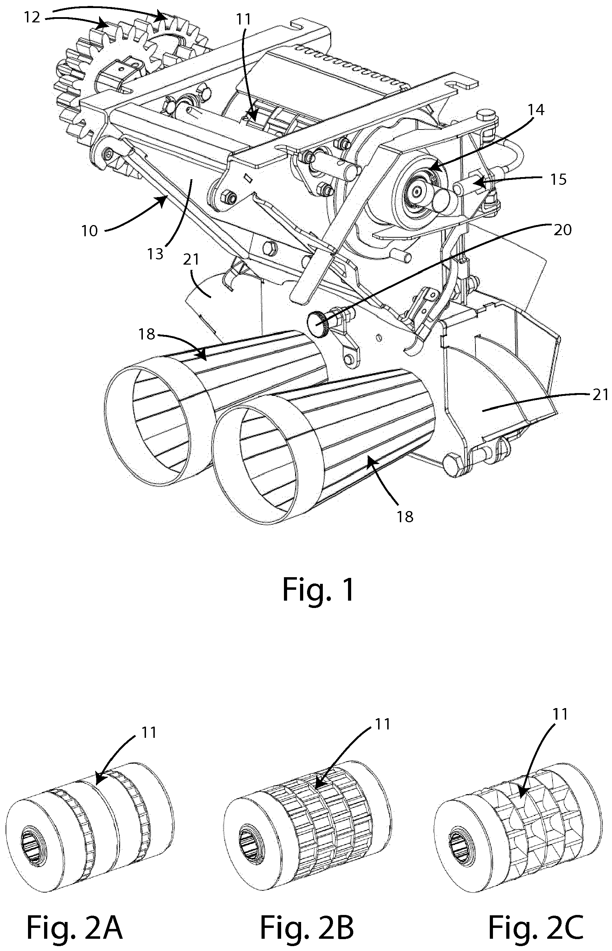

The attached fig. 2A, 2B and 2C show three types of known metering spools 11, whih are configured to vary the quantity of product which is delivered into the soil according to the agricultural harvest to obtain.

The spools 11 can be easily reached and replaced within the metering unit 10 through the disengagement and subsequent insertion of the bush 14, which is maintained in a seat provided by the openable wall 13; the spools 11 are also available in a wide range of different volumes depending on the quantity of product (seed or fertilizer) to be delivered; moreover, a control sensor 15 configured to detect the rotation of the spool 11 is provided.

Advantageously, once dispensed from the spool 11, the product is brought to the distribution heads of the agricultural seeding or fertilizing machine by mixing it with an air-flow and thanks to a transport system based on the Venturi effect.

In particular, according to the embodiment of the volumetric metering unit shown in fig. 1 and 3 to 8, in order to share the product to be dispensed into two equal parts and then send said product to two respective distribution groups of the agricultural machine, the spool 11 is arranged into the structure 10 in a transverse direction (i.e. with the axis of the reel 11 which is horizontally positioned) so as to obtain two symmetrical portions of said spoon 11 with respect to a movable vertical bulkhead 16 which is arranged below and in a transverse direction, preferably in a perpendicular direction, with respect to the spool 11.

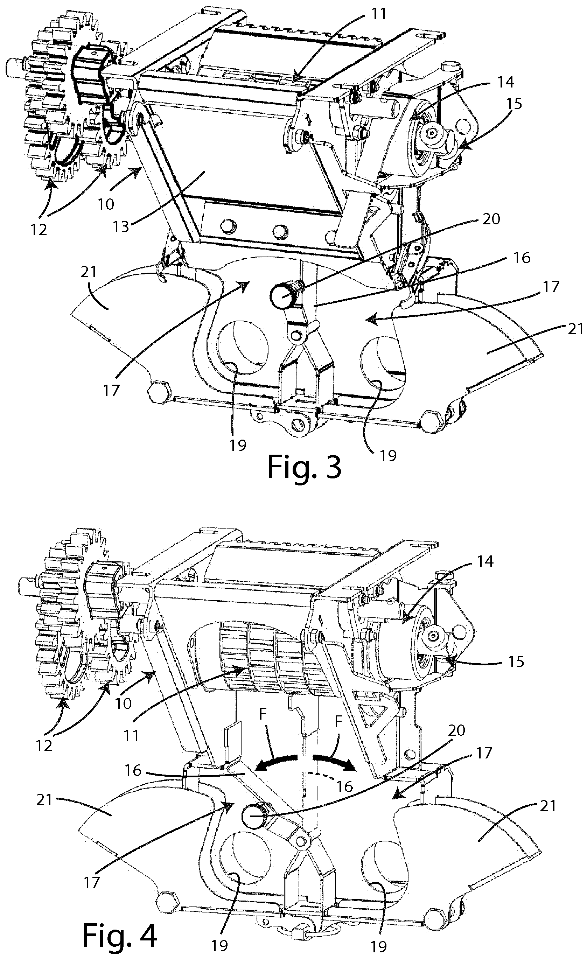

The vertical bulkhead 16, in a first operating position (shown in detail in the attached fig. 3) is arranged so as to delimit two separate chambers or compartments 17, of equal volume, which are formed inside the structure 10 and below the spoon 11, where the product distributed by the spoon 11 is discharged; each chamber 17 is connected to a transport system, which uses a Venturi tube 18, located in a suitable seat 19 provided in the relative chamber 17, so that the total volume of the product, dispensed and divided into the two chambers 17, flows, by means of two respective Venturi tubes 18, to a relative distributor unit of the agricultural machine. The bulkhead 16 can be automatically operated from outside by means of an electronic system or can be manually operated by means of a knob 20 (according to the direction of the arrows F of fig. 4), in order to convey all the product dispensed from the spoon 11 inside a single Venturi tube 18 and therefore inside a single distribution unit of the agricultural machine. This function is useful, for example, for seeding the soil by using half a machine.

Also according to the invention, the metering unit also has a seed recovery system which is used to carry out the seeding test, a test necessary before each seeding operation to verify the delivery's accuracy in a prefixed time interval.

The seed recovery system is managed by a control system (manual or electronic) and includes two revolving hatches 21 which are hinged to the base of the structure 10 and which are configured to open and close the bottom of the chambers 17 for collecting the dispensed product.

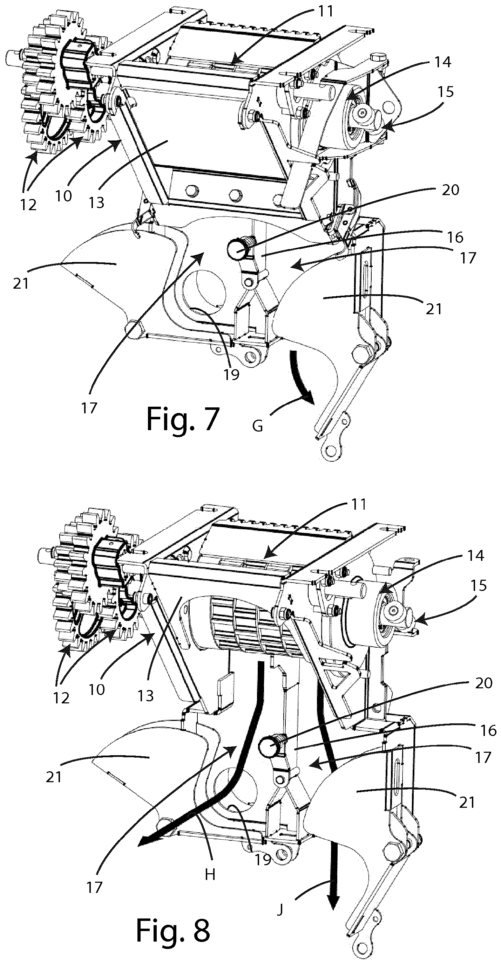

In particular, in the position shown in the attached fig. 3 and 4, the hatches 21 allow the bottom of the chambers 17 to be closed and allow the product to pass through the Venturi tubes 18 inserted in the respective seats 19; according to said working method, as the bottom of the chambers 17 is closed, the product passes through the seats 19 of the Venturi tubes 18 (the path identified by the arrow H in the attached fig. 8).

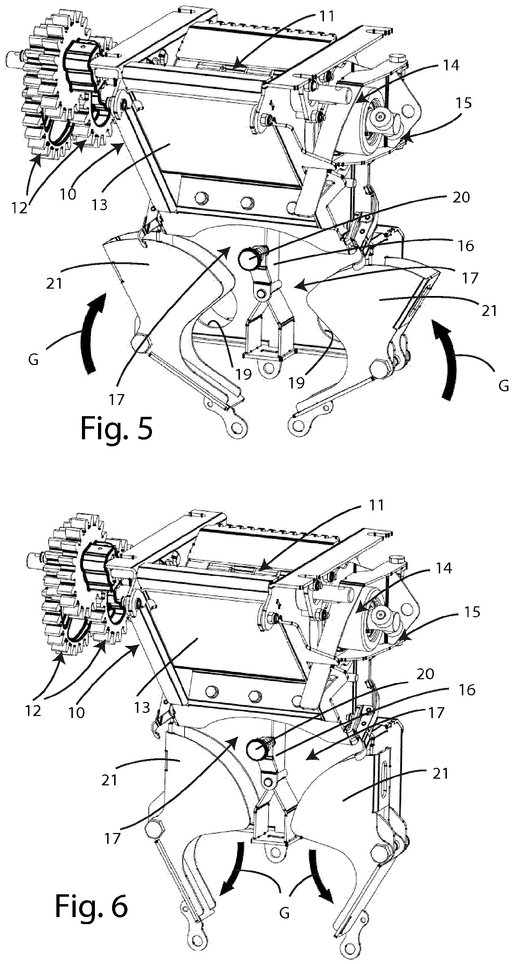

When the hatches 21 are rotated according to the direction of the arrows G (positions shown in the attached fig. 5, 6 and 7), each bottom of the chambers 17 is opened and the product dispensed from the spoon 11 passes through said bottom (path identified by the arrow J of the attached fig. 8); at the same time, the hatches 21, thanks to their shape, allow the seats 19 to be closed and therefore block the passage of the product inside the Venturi tubes 18.

This mode allows the seeding test to be carried out (by recovering the dispensed product from the spoon 11 at the bottom of the chambers 17, according to the direction of the arrow J of fig. 8) by using the Venturi system for transporting the product (thus guaranteeing the possibility of performing tests in working conditions); furthermore, there is no risk that the seeds (especially the smaller seeds) enter the seats 19 of the Venturi tubes 18, thus altering the results of the seeding test.

Finally, the aforesaid test mode also prevents the operator from forgetting one or both the hatches 21 in the open position of fig. from 5 to 8, since stopping the air flow inside the Venturi tubes 18 causes a cavitation of the fan of the transport system, which immediately sends an alarm signal.

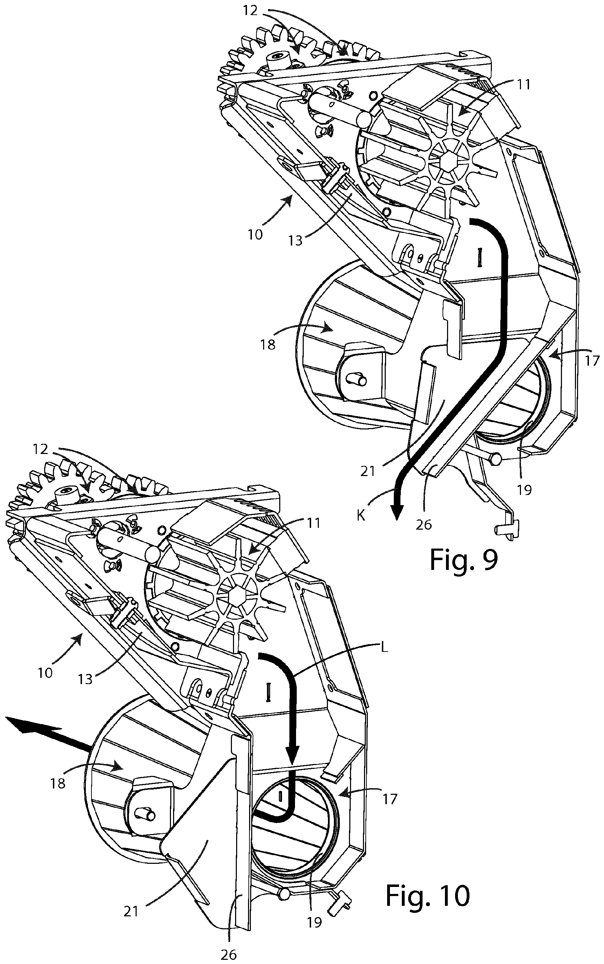

A further embodiment of the volumetric metering unit, which is the object of the invention, is shown in fig. 9 and 10, according to which the product to be dispensed is sent into the relative distribution unit of the agricultural machine. Unlike the distribution unit described and shown in fig. 1 to 8, in this case the distribution unit according to the invention comprises a single Venturi tube 18 for distributing the seeds.

As shown in the first embodiment, the spoon 11 is arranged transversely into the structure 10 (i.e. with the axis of the spoon 11 which is horizontally positioned and which is parallel to the flow of the seed to be dispensed inside the Venturi tube 18), while a movable bulkhead 26 is arranged below with respect to the spoon 11. In a manner similar to the first embodiment, the seed recovery system is managed by a control system (manual or electronic) and comprises a rotatable hatch 21 connected transversely to the movable bulkhead 26 and configured to open and close the chamber 17 for collecting the dispensed product.

In a working position, shown in the attached fig. 9, the movable bulkhead 26, which is stably fixed to the hatch 21, is placed perpendicular to the spool 11, so as to delimit the chamber or compartment 17 and to allow the passage of the product through the Venturi tube 18 inserted in the respective seat 19 (path identified by the arrow L in the attached fig. 10).

In a further working position (shown in detail in the attached fig. 10), the movable bulkhead 26 together with the hatch 21 are inclined and arranged so as to interrupt the passage of the seeds in the Venturi tube 18; thus, the seat 19 is closed and a path (identified from the arrow K of the attached fig. 9) is created through which the seeds delivered by the spoon 11 are directly sent downwards in order to carry out the necessary dosimetric measurements.

It is thus found that the above described invention fully achieves the aforementioned objects.

Finally, the metering unit according to the invention can be used, in addition to the seeds and coupled with a seeding machine, also for any other granular and/or powder product, such as for example fertilizers, thus maintaining the same characteristics of reliability and efficiency indicated in the above description.

The features of the volumetric metering unit for agricultural seeding and fertilizing machines, which is the object of the present invention, are therefore clear from the above description, as well as the advantages thereof.

In particular, said advantages concern the following aspects:
- possibility of using different types of spoons for various types of products to be dispensed;
- possibility to divide the product to be dispensed into two equal parts;
- possibility of conveying all the product to be dispensed into a single distributor group of the agricultural machine;
- possibility of simplifying and speeding up the seeding test with respect to the known prior techniques;
- possibility to carry out seeding tests even with a driven fan;
- possibility of obtaining highly reliable results in the seeding test;
- possibility of obtaining a totally automatic management, which is settable by the operator, related to the quantity of product to be used and/or the dosage of product, by using a specific software program.

Finally, it is clear that numerous variations can be made to the volumetric metering unit of the invention, without thereby departing from the novelty principles inherent in the inventive idea of the appended claims, as it is clear that, in the practical embodiment of the invention, the materials, shapes and the dimensions of the illustrated details may be any according to requirements and the same may be replaced with other technically equivalent ones.

## Claims

1. A metering unit for agricultural seeding and pneumatic fertilizing machines, comprising an external structure (10) shaped like a hopper, inside which a metering spool (11) having a substantially cylindrical shape and being rotatable by means of an external transmission (12) is arranged, said metering spool (11) being configured to deliver a determined quantity of product, such as seeds and/or fertilizer, which is mixed with an air-flow and sent to one or more distribution groups of an agricultural seeding and/or fertilizing machine, said distribution groups comprising at least one Venturi tube (18), **characterized in that** said metering spool (11) has an axis of rotation which is placed in a horizontal direction with respect to a movable bulkhead (16; 26), said bulkhead (16 26) being arranged below the metering spool (11) and being placed in a transverse direction with respect to said axis of rotation of said metering spool (11).

2. The metering unit according to claim 1, **characterized in that** said movable bulkhead (26) is arranged, in a first working position, so as to delimit a path of said seeds and/or fertilizer, which are distributed by said spool (11) downwards and below said at least one Venturi tube (18) in order to carry out a dosimetric measurement of said seeds and/or fertilizer.

3. The metering unit as claimed in at least one of the previous claims, **characterized in that** said movable bulkhead (16) is arranged, in a second working position, so as to delimit two separate chambers or compartments (17), of equal volume, formed inside said structure (10) and placed below said metering spool (11), where the product delivered by said metering spool (11) is collected, each of said two chambers (17) being connected to means for conveying the product to said one or more distribution groups and said at least one Venturi tube (18) being inserted in a seat (19) of each chamber (17).

4. The metering unit as claimed in at least one of the previous claims, **characterized in that** said movable bulkhead (16; 26) is arranged, in a third working position, so as to delimit a single chamber or compartment (17), formed inside said structure (10) and placed below said metering spool (11), so that the product is delivered into said single chamber (17), said single chamber (17) also being connected to means for conveying the product to said one or more distribution groups of the agricultural machine and said at least one Venturi tube (18) being inserted in a seat (19) of said single chamber (17).

5. The metering unit according to at least one of the previous claims, **characterized in that** said movable bulkhead (16; 26) is automatically operated by an electronic system or is manually operated by means of a knob (20).

6. The metering unit according to at least one of the previous claims, **characterized in that** said metering unit comprises at least one rotatable hatch (21) which is configured to open and close said single chamber (17) for collecting the product delivered by said spool (11).

7. The metering unit according to claim 6, **characterized in that** said at least one rotatable hatch (21) is firmly fixed to said movable bulkhead (26).

8. The metering unit according to at least one of the claims 6 and 7, **characterized in that** said at least one rotatable hatch (21), in a first working position, is configured to close the bottom of said single chamber (17), so as to allow the passage of the product delivered by said spoon (11) through said at least one Venturi tube (18), said at least one Venturi tube (18) being inserted in a respective seat (19) of said single chamber (17).

9. The metering unit according to at least one of claims 6, 7 and 8, **characterized in that** said at least one rotatable hatch (21), in a second working position, is configured to open the bottom of said single chamber (17), so as to allow the passage of the product delivered by said spoon (11) and at the same time to close said seat (19) where said at least one Venturi tube (18) is inserted, thus stopping the passage of said product.
